(19) Europäisches Patentamt
European Patent Office
Office européen des brevets

(11) Publication number: 0 218 252 B1

(12) # EUROPEAN PATENT SPECIFICATION

(45) Date of publication of patent specification: **27.12.91**

(51) Int. Cl.5: **B32B 27/28**, B32B 27/30, B32B 27/36, B32B 27/40, B32B 31/30

(21) Application number: **86113992.1**

(22) Date of filing: **09.10.86**

(54) **Multilayer coextruded polymer slabs and structural shapes and process for their production.**

(30) Priority: **09.10.85 IT 2241085**

(43) Date of publication of application: **15.04.87 Bulletin 87/16**

(45) Publication of the grant of the patent: **27.12.91 Bulletin 91/52**

(84) Designated Contracting States: **AT BE CH DE FR GB LI NL SE**

(56) References cited: **DE-B- 2 119 934**

(73) Proprietor: **MONTEDIPE S.r.l.**
**31, Foro Buonaparte**
**I-20121 Milan(IT)**

(72) Inventor: **Biglione, Gianfranco**
**63, viale Risorgimento**
**I-46100 Mantova(IT)**
Inventor: **Fasulo, Gian Claudio**
**11, via Puccini**
**I-46010 S.Silvestro di Curtatone Mantova(IT)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

**EP 0 218 252 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to multilayer coextruded polymer slabs and structural shapes wherein the adhesion is achieved by coupling with the polymer layers a sheet of a vinyl-aromatic copolymer containing ethylenically unsaturated nitrile-derived monomer units.

The production of multilayer extruded articles in the form of slabs, films, structural shapes etc. is of increasing importance in plastics processing owing to the inherent technical and economic advantages. Through a suitable combination of different extruded polymers, this production technique results in multilayer composites having special practical performances which cannot be obtained by the use of a single polymer.

The above-mentioned multilayer composite may be obtained according to two different processes, i.e., by lamination or by coextrusion.

The lamination method which has been used until now for flat slabs comprises applying to the slab, at the outlet of the extrusion head, one or more preformed films or other polymers by means of a slight deflection between the hot rollers of a rotary press.

The coextrusion method, on the contrary, comprises the simultaneous extrusion of several polymers which flow together into a single head wherein the stratified streams of the different components are combined to form the multilayer extruded article.

The production of coextruded composites serves different purposes such as, for instance, the achievement of specific surface effects (brilliance or opacity) to improve the appearance of materials or to obtain composites with particular properties at acceptable costs. Generally, the aim is to couple a carrier base polymer with one or more thin layers of valuable polymers able to give particular properties such as, for instance, resistance to external agents, barrier properties against moisture or gas diffusion or a better resistance to abrasion or scratching.

The pre-requisite for obtaining a good multilayer composite is compatibility of the different polymers with each other so that a good adhesion between the layers of the different polymers employed is obtained. If polymers are not sufficiently compatible with each other, the additional use of adhesive agents is necessary, which creates the problem of having to recover scrap in order to reduce the costs of the process.

Owing to their good processing balance, properties and cheapness, vinyl-aromatic polymers such as anti-shock polystyrene, are attractive materials as carrier base resins for the production of multilayer coextruded composites. However, their use as such is limited because of their incompatibility with some valuable polymers such as, for instance, technopolymers and polar polymers in general. This is, for instance, the case with multilayer coextruded composites of high-impact polystyrene (HIPS) with special technical polymers such as polymethylmethacrylate (PMMA), polycarbonates (PC), thermoplastic polyurethanes (TPU), polybutylene terephthalate (PBT), acrylonitrile-butadiene-styrene terpolymers (ABS) and the like.

In these cases a poor adhesion of the layers with accompanying delamination, either on the coextruded slabs or on the manufactured article obtained therefrom by thermoforming is, thus, noted.

DE-A-2119934 describes a laminate wherein the three layers thereof consist of resins of chemically very similar nature. The two outer layers are composed of polystyrene, optionally modified with a diene polymer and of a styrene-acrylonitrile copolymer elastified with a butadiene polymer, respectively. The inner (adhesion-promoting) layer consists of a mixture of at least 30% by weight of a copolymer of styrene and an ester or anhydride of an unsaturated carboxylic acid and of at least one other polymer, preferably a copolymer of styrene and/or acrylonitrile grafted onto a diolefin or acrylate polymer.

An object of the present invention is to provide multilayer coextruded polymer slabs and structural shapes which do not show the above-mentioned drawbacks.

In accordance with the present invention, these and other objects are attained by means of multilayer polymer slabs and structural shapes obtained by simultaneous extrusion of different polymers in a single extrusion head wherein at least one of the different layers consists of a sheet of a vinyl-aromatic copolymer which contains up to 20% by weight of ethylenically unsaturated nitrile-derived monomer units.

In particular, it has been found that, by using a vinyl-aromatic polymer modified with, preferably, 5 to 15% by weight of an ethylenically unsaturated nitrile, coextruded multilayer slabs and structural shapes having high adhesion are obtained.

The coextrusion is carried out by means of a conventional device. The extrusion temperature depends on the materials used but is generally within the range of from 180 to 250 °C.

The finished composite is passed through a multi-roller calender, the rollers of which are kept at a temperature of from 20 to 85 °C to promote the adhesion and cool the coextruded material.

The term "vinyl-aromatic copolymer" as used in the present description and claims refers to any thermoplastic solid copolymer predominantly consisting of a chemically bound vinyl-aromatic compound, e.g., a copolymer consisting of at least 50% by weight of monomer units derived from one or more vinyl-aromatic compounds of the general formula:

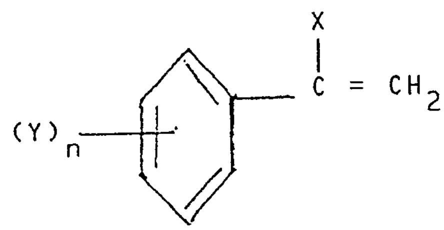

wherein X represents hydrogen or alkyl containing 1 to 4 carbon atoms; Y represents halogen or alkyl containing 1 to 4 carbon atoms and n is 0 or an integer of from 1 to 5.

Examples of vinyl-aromatic compounds of the above formula are:
Styrene, methylstyrene, mono-, di-, tri-, tetra- and penta-chloro-styrene and the corresponding alpha-methyl-styrenes, styrenes alkylated in the nucleus and the corresponding alpha-methyl styrenes such as ortho- and para-methyl-styrenes, ortho- and para-ethyl-styrenes, ortho-and para-methyl-alpha-methyl-styrenes.
These monomers may be used alone or as mixtures.

The term "vinyl-aromatic copolymer" also encompasses polystyrenes modified with rubbers in an amount of from 3 to 10% by weight, which are generally used to make the polymers resistant to impact.

As rubbers, both natural and synthetic rubbers may be used. Synthetic rubbers that are suitable for this purpose are, for example, polybutadiene, polyisoprene, butadiene and/or isoprene copolymers with styrene or other monomers which have a glass transition temperature (Tg) of lower than -20 ° C. These butadiene and/or isoprene polymers may contain the monomers in different configurations such as, for instance, a different content of cis, trans and vinyl configurations. In the copolymers, the monomers may be randomly distributed or arranged in blocks or star-shaped.

Other synthetic rubbers which may be used for the preparation of vinyl-aromatic anti-shock copolymers modified according to the present invention are saturated rubbers such as ethylene-propylene rubbers, ethylene-propylene-diene terpolymers (EPDM), silicon rubbers containing unsaturated groups, etc.

The vinyl-aromatic copolymers modified with an ethylenically unsaturated nitrile may be obtained according to any known polymerisation process provided that a mixture of vinyl-aromatic/unsaturated nitrile monomers is used as the starting monomers.

The more preferred polymerisation processes are suspension polymerisation, bulk-suspension polymerisation and continuous bulk-polymerisation, which are comprehensively described in the literature such as, for instance, US-A-2 694 692 and 2 862 906 and in Amos, Polym. Eng. Sci., 14 (1974), 1, pages 1 to 11. Other processes such as emulsion polymerisation or suspension polymerisation starting from rubber latices may also be used provided they allow that materials showing the above-mentioned characteristics are obtained.

According to the bulk-suspension polymerisation process, the rubber is dissolved in the mixture of vinyl-aromatic/unsaturated nitrile monomers and then the mass is subjected to thermal or catalytic polymerisation up to a conversion of about 30% and generally not higher than 50%.

After this first prepolymerisation step, the mass is dispersed in water under strong agitation and with the aid of suspending agents and undergoes copolymerisation followed by suitable and conventional thermal treatment.

The reaction temperature may be in the range of from 50 to 170 ° C and preferably 100 to 160 ° C.

The copolymerisation is, generally, carried out in the presence of oil-soluble catalysts which may be added either at the beginning of or during polymerisation. Suitable catalysts are, for example, benzoyl-peroxide, lauryl-peroxide, di-cumyl-peroxide, di-tert.-butyl-perbenzoate, di-tert.-butyl-peroxide etc.

The pre-polymerisation may also be started thermally. If desired, a chain-transfer agent such as, for instance, tert.-dodecylmercaptane or the like may be used.

As suspending agents either water-soluble organic compounds such as polyvinyl alcohol, acrylic copolymers, cellulose derivatives or partially saponified polyvinyl acetate or water-soluble inorganic compounds such as tricalcium phosphate or barium sulphate may be used, alone or mixed with a surface active agent or with sodium sulfite. The suspending agents are, generally, used in an amount of from 0.1 to 5% by

weight, based on the organic phase.

The copolymerisation may also be directly carried out in suspension without prepolymerisation, provided that the agitation of the mass is performed in a manner such that a suitable precipitation and dispersion of the rubber particles grafted on the polymer matrix is obtained.

According to the continuous bulk polymerisation process, the rubber solution in the mixture of vinyl-aromatic/unsaturated nitrile monomers is fed continuously and copolymerised in reactors arranged in series and agitated, according to a well-defined temperature cycle, up to a conversion of above 50%. The mass is then treated under vacuum to remove the unreacted monomers which are suitably recycled to the first reactor.

The copolymerisation is, generally, carried out under heating in the presence of diluents, the most common of which is ethylbenzene. The temperature is in the range of from 50 to 240 °C, preferably 100 to 220 °C.

Any polymer which can be extruded flat may be used for the preparation of the multilayer slabs and structural shapes which are the object of the present invention.

Preferred polymers are technopolymers or alloys thereof which are characterized by high mechanical properties, in particular those having a modulus of elasticity of between 5000 and 50000.

Examples of suitable technopolymers are:

A) aromatic polycarbonates;
B) thermoplastic polyurethanes;
c) crystalline aromatic polyesters;
D) styrene-butadiene-acrylonitrile terpolymers;
E) styrene-acrylonitrile copolymers;
F) resins of acrylic esters; and
G) high-impact polystyrene (HIPS),

A) aromatic polycarbonates are known products; they have the following recurring unit:

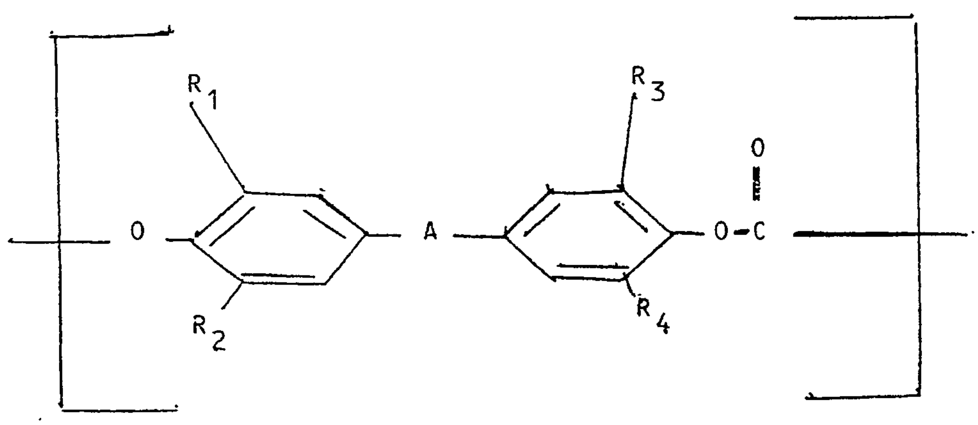

(I)

wherein $R_1$, $R_2$, $R_3$ and $R_4$ represent hydrogen or an alkyl group containing 1 to 3 carbon atoms; and A represents -O-, -CO-, $-SO_2-$, an alkylene group containing 1 to 10 carbon atoms, an alkylidene group containing 1 to 10 carbon atoms, a cycloalkylene group containing 5 to 15 carbon atoms, a cycloalkylidene group containing 5 to 15 carbon atoms or the group:

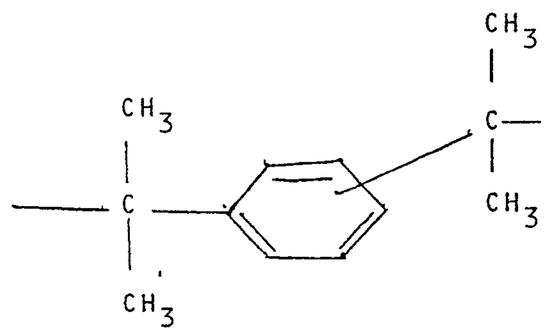

The aromatic polycarbonates containing the recurring unit (I) are commercially available from, for instance, the General Electric Company, Pittsfield, Mass., U.S.A. under the tradename LEXAN® and Enichimica S.p.A., San Donato Milanese (Milano) under the tradename SINVET®.

Generally, any aromatic polycarbonate may be used, although those obtained from bisphenol A are particularly preferred. Polycarbonates used for preparing the composites of the present invention have an average molecular weight of between 10000 and over 200000, preferably between 20000 and 60000.

B) thermoplastic polyurethanes consist of long-chain polyols having a molecular weight of from 400 to 10000, of polyisocyanates, preferably diisocyanates and of chain-extenders, preferably short-chain polyols having a molecular weight of up to 380.

In these polyurethanes the equivalent ratio of isocyanate groups to active hydrogen atoms (NCO/OH is preferably between 0.95 and 1.1 and, in particular, between 0.98 and 1.08. Substantially linear polyols having a molecular weight of from 400 to 10000 and, preferably, 800 to 6000, which may be used for preparing the thermoplastic polyurethanes, comprise any known polyester, polyacetone, polyether, polythioether, polyesteramide, polycarbonate, polyacetal containing two or, in small quantity, also three active groups, generally in the form of hydroxy groups; vinyl polymers such as, for instance, polybutadiene-diols, polyhydroxy compounds containing urethane or urea groups and other compounds containing other active groups such as amino groups, carboxy groups, thiol groups etc. These compounds are all well-known in the art and are, for instance, described in DE-C-2 302 564 and 2 423 764 and in US-A-3 963 679, 3 984 607 and 4 035 213.

It is, in particular, preferred to use as polyols hydroxy group-containing polyesters of glycols and adipic acid, phthalic acid and/or terephthalic acid and their hydrogenation products, hydroxylated polycarbonates; polycaprolactones, polyethyleneoxide, polypropyleneoxide and mixed polyethers of ethylene and propylene oxide. Polyesters of glycols and adipic acid and polycaprolactone diols are particularly preferred.

Diisocyanates which may be used for preparing the thermoplastic polyurethanes essentially comprise any aliphatic, cycloaliphatic, aromatic, arylaliphatic and heterocyclic diisocyanate and, mainly, those of the generally known type described in the above-mentioned German and US patents. Particularly preferred diisocyanates are hexamethylen-diisocyanate, isophorone-diisocyanate, diphenylmethane-diisocyanate and naphthalene-1,5-diisocyanate which may, optionally, be substituted by methyl groups.

The above-mentioned diisocyanates may be used alone or mixed with up to 15 mole% of a higher polyisocyanate in such a proportion that the product obtained is still fusible or thermoplastic. The chain-extenders used for preparing the polyurethanes are also well-known and described, for instance, in the above-mentioned German and US patents. Some examples of suitable low-molecular weight chain extenders are polyalcohols, preferably glycols; polyamines, hydrazines, hydrazides, etc. Aminoalcohols such as ethanolamine, diethanolamine, triethanolamine, 3-amino-propanol, etc. may also be used. Preferred chain-extenders are ethylene glycol, di- and triethylene glycol, 1,4-butanediol, 1,6-hexanediol and hydroquinone di-hydroxy-ethylether.

The polyurethanes used for manufacturing the multilayer composites of the present invention may contain rubber, hydrolysis and oxidation stabilizers, anti-oxidizing agents such as 2,6-tert.-butyl-4-methylphenol, sterically hindered phenols or amines.

Thermoplastic polyurethanes are available on the market from many sources such as, for instance:
GETIS Vigevano (PV) under the tradename GETHANE®,
BF-GOODRICH CHEMICAL, ITALIA (MI) under the tradename ESTANE®,
BAYER under the tradename DESMOPAN®,
UPJOHN under the tradename HELLETHANE®.

C) crystalline aromatic polyesters are obtained by polymerising a glycol of the general formula

$HO-(CH_2)_r-OH$ (II)

wherein r is an integer of from 2 to 10, and a dicarboxylic acid of the formula:

$HOOC-R_5-B-R_6-COOH$ (III)

wherein $R_5$ and $R_6$ each represent $-(CH_2)_{\overline{m}}$ and wherein m is zero or an integer of from 1 and 4, and B is a divalent aromatic radical represented by:

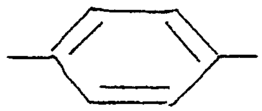 , 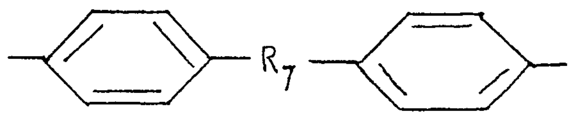

wherein $R_7$ may be:
$-(CH_2)_p-$, $-(CH_2)_p-CO-(CH_2)_p-$;
$-(CH_2)_p-O-(CH_2)_p-$, $-O-(CH_2)_q-O-$;

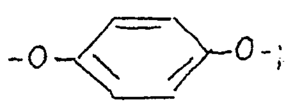 ; $-(CH_2)_p-S-(CH_2)_p-$

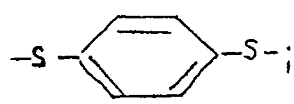 ; $-S-(CH_2)_p-S-$; $-SO_2-$;

wherein p may be zero or an integer of from 1 to 4 and q is an integer of from 1 to 5.

Representative examples of crystalline polyesters obtained by polymerising a glycol (II) with a dicarboxylic acid (III) are:
polyethylene-terephthalate, polybutylene-terephthalate and polyethylene-2,2′-diphenoxy-ethane-4,4′-dicarboxylate.

The above-mentioned crystalline polyesters preferably have a molecular weight of between 10 000 and 160 000. Manufacturers of said resins are:
MONTEDIPE under the tradename PIBITER® and
the General Electric Company under the tradename VALOX®.

D) styrene-butadiene-acrylonitrile terpolymers known as ABS resins are obtained according to the process described in US-A-3 130 177. ABS resins are known and manufactured by different manufacturers and are available on the market in a great variety. Examples are:
ENICHIM POLIMERI under the tradename URTAL®
BAYER under the tradename NOVODUR®,
MONSANTO under the tradename LUSTRAN®,
BASF under the tradename TERLURAN®,
BORG WARNER under the tradename CYCOLAC®

E) the styrene-acrylonitrile copolymer known as SAN resin is commonly manufactured by a suspension polymerisation process or by a bulk-continuous or emulsion-polymerisation process. The concentration of bound acrylonitrile may vary from 23 to 35%, the instrinsic viscosity of the finished product is between 0.07 and 0.1 l/g.
SAN resins are available on the market from many manufacturers such as, for instance:
MONTEDIPE under the tradename KOSTIL®,
MONSANTO under the tradename LUSTRAN®,
BASF under the tradename LURAN®,
DOW under the tradename TYRIL®.

F) the resins of acrylic esters such as polymethylmethacrylate are obtainable according to the methods described in Kirk Othmer, Encyclopaedia of Chemical Technology, Vol. 1, page 386, 1978.

Known acrylic resins which are available on the market are those manufactured by:
VEDRIL under the tradename VEDRIL®,
ICI under the trademark PERSPEX®.

G) high-impact polystyrene is manufactured by many companies, among these:
MONTEDIPE under the trademark EDISTIR®.

In order to further illustrate the process of the present invention, reference is made to Fig. 1 wherein, as example, only three extruders (1,2,3) are shown. The number of extruders in fact may differ in accordance with the desired final composite.

The three extruders come together at a coextrusion head (4) from which the multilayer composite (5) is recovered, which is cooled by the rollers (6,7,8) of a calender and is drawn by means of the train (10).

The slab proceeds to further operations such as cutting or winding, which are not shown in Fig. 1.

In the upper part, the calender is provided with a roller (9) from which it is possible to unwind a preformed film of polymer to be coupled, by lamination, with the slab (5) at the outlet of the coextrusion head.

EXAMPLE 1 (comparative)

The apparatus of Fig. 1 is used. The central extruder has a diameter of 45 mm and an L/D ratio of 25. The two lateral extruders have a diameter of 30 mm and an L/D ratio of 25. The three extruders come together at a coextrusion head provided with a "Black Box" manufactured by OMIPA (flathead type "TPL"), suitable for manufacturing a 400 mm wide slab having a variable thickness of from 0.5 to 4 mm. HIPS of the type EDISTIR SRL 600 is introduced into the extruder (1) and PMMA type VEDRIL 8 is fed into extruder (3). A 3.5 mm thick composite slab having an upper layer of PMMA (thickness of 0.5 mm) and a 3 mm lower HIPS layer is coextruded.
The extrusion conditions are given in table I.
The two coextruded polymer layers do not show any adhesion and are easily separated by hand.

EXAMPLE 2

The procedure of example 1 is repeated but a vinyl-aromatic copolymer having the following composition: 72% styrene, 8% acrylonitrile, 8% butadiene, 12% alpha-methyl-styrene units is fed into extruder (1) and a coextrudate with PMMA is obtained, the adhesion of which is good. The extrusion conditions are given in table I.

These slabs are thermoformed on a thermoforming machine TERMOFORMING "TMMP" and a shell having the shape shown in Fig. 2 and the following dimensions: h = 240 mm, $h'$ = 150 mm, l = 270 mm, $l'$ = 200 mm, is obtained. The slab is thermoformed with the PMMA film both on the inside and on the outside part of the cell.

In both cases no delamination signs are observed on the shells.

EXAMPLE 3

The procedure of example 1 is repeated but a vinyl-aromatic copolymer having the same composition as in example 2, which acts as an adhesive between HIPS and PMMA is fed into extruder (2). The extrusion conditions are given in table I.

Unlike the results of example 1, the slab thus obtained does not show any delamination signs, even after thermoforming under the conditions of example 2.

EXAMPLE 4

The procedure of example 1 is repeated but a vinyl-aromatic copolymer having the following composition: 20% acrylonitrile, 8% butadiene, 72% styrene is fed into extruder (1) and a composite with PMMA is obtained which shows good adhesion. The extrusion conditions are given in table I.

No delamination signs are observed, even after thermoforming of shells obtained under the conditions of example 2.

EXAMPLE 5 (reference)

By using the apparatus of Fig. 1 and feeding into extruder (1) the vinyl-aromatic copolymer of example 4, mixed with 50% of a copolymer containing 20% acrylonitrile, 10% EPDM rubber, 70% styrene and coupling, by lamination, an 0.07 mm thick film consisting of PMMA type VEDRIL 8, unwound from the reel and applied by means of calenders (6) and (7), good adhesion of the film is obtained, which remains unchanged after thermoforming. The lamination conditions are given in table I.

EXAMPLE 6 (comparative)

The procedure of example 1 is repeated but PC type SINVET 221 is fed into extruder (3) and extruded at a temperature of 240 °C.

The coextruded slabs do not have good adhesion and show clear delamination signs on the thermoformed pieces.

EXAMPLE 7

The procedure of example 2 is repeated but PC is fed into extruder (3).
The slabs thus obtained show good adhesion and no delamination signs can be observed on the thermoformed shells.

EXAMPLE 8

The procedure of example 3 is repeated but PC is fed into extruder (3).
The multilayer slab obtained in this case also shows good adhesion.

EXAMPLE 9 (comparative)

The procedure of example 1 is repeated but a 50/50 mixture of TPU GETHANE I/98 and SAN Kostil AF3 copolymer is fed into extruder (3) and extruded at a temperature of 190 °C.
The coextruded slabs do not show good adhesion.

EXAMPLE 10

The procedure of example 3 is repeated but the TPU/SAN mixture of example 9 is fed into extruder (3).
The slabs obtained show good adhesion and no delamination signs are present on the thermoformed cells.

EXAMPLE 11 (comparative)

The procedure of example 1 is repeated but PBT type PIBITER N 100 is fed into extruder (3) and extrusion carried out at a temperature of 230 °C.

EXAMPLE 12

The procedure of example 3 is repeated but PBT is fed into extruder (3).
The slabs obtained show good adhesion and no delamination signs are present on the thermoformed cells.

EXAMPLE 13 (reference)

The procedure of example 5 is repeated but lamination is carried out using an ABS type NOVODUR RF film having a thickness of 0.07 mm.
The film shows good adhesion to the vinyl-aromatic copolymer slab.

EXAMPLE 14 (comparative)

The procedure of example 13 is repeated but HIPS type EDISTIR SRL 600 is fed into extruder (1).
The film does not show good adhesion to the HIPS slab.

EXAMPLE 15

The procedure of example 2 is repeated but a copolymer containing 16% acrylonitrile, 10% EPDM and 74% styrene units is fed into extruder (3) and the operation carried out at a temperature of 220 °C.
The multilayer slabs obtained show good adhesion, even after thermoforming of the shells.

EXAMPLE 16 (comparative)

The procedure of example 1 is repeated but HIPS type EDISTIR SRL 600 is fed into extruder (1) and SAN type KOSTIL AF (thickness 0.05 mm) is fed into extruder (3).
The obtained composite shows poor adhesion.

EXAMPLE 17

The procedure of example 2 is repeated but SAN type KOSTIL AF is fed into extruder (3).
The obtained composite shows good adhesion.

EXAMPLE 18

The procedure according to example 8 is repeated but a SAN copolymer with 8% acrylonitrile is fed into extruder (2).
The obtained composite slab shows a good adhesion betwen the different polymer layers.

TABLE I

EXTRUSION CONDITIONS

| Example No. | | | 1 | 2 | 3 | 4 | 5(°) |
|---|---|---|---|---|---|---|---|
| Temp. Extruder | 1 | °C | 205 | 215 | 205 | 210 | 215 |
| | 2 | °C | - | - | 210 | - | - |
| | 3 | °C | 200 | 200 | 200 | 200 | - |
| Extruder Capacity | 1 | kg/h | 26.5 | 25.0 | 24.0 | 25.5 | 26.0 |
| | 2 | kg/h | - | - | - | - | - |
| | 3 | kg/h | 4.5 | 4.2 | 4.0 | 4.2 | - |
| Head temp. | | °C | 210 | 210 | 210 | 210 | 210 |
| Roller temp. | 1 | °C | 75 | 80 | 75 | 75 | 110 |
| | 2 | °C | 80 | 85 | 85 | 85 | 100 |
| | 3 | °C | 90 | 95 | 95 | 95 | 80 |

(°) Lamination with PMMA film

## Claims

1. Multilayer coextruded polymer slabs and structural shapes obtained by simultaneous extrusion of different polymers with a single extrusion head wherein at least one of the different layers consists of a vinyl-aromatic polymer containing up to 20% by weight of an ethylenically unsaturated nitrile.

2. Multilayer coextruded polymer slabs and structural shapes as in claim 1, wherein the vinyl-aromatic polymer contains 5 to 15% by weight of said ethylenically unsaturated nitrile.

3. Multilayer coextruded polymer slabs and structural shapes according to claim 1 or 2, wherein the vinyl-aromatic copolymer contains at least 50% by weight of units derived from one or more vinyl-aromatic compounds of the general formula:

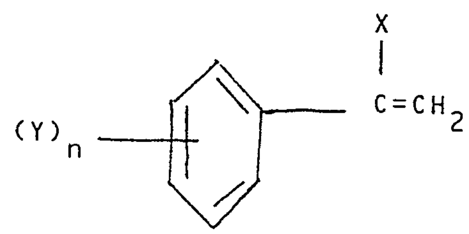

wherein X represents hydrogen or alkyl containing 1 to 4 carbon atoms, Y represents halogen or alkyl containing 1 to 4 carbon atoms and n is zero or an integer of from 1 to 5.

4. Multilayer coextruded polymer slabs and structural shapes according to claim 3, wherein the vinyl-aromatic polymer is selected from styrene, methylstyrene, mono-, di-, tri-, tetra-, penta-chlorostyrene and the corresponding alpha-methyl-styrenes, styrenes alkylated in the nucleus and the corresponding alpha-methyl-styrenes such as ortho- and para-methyl-styrenes, ortho-and para-ethyl-styrenes, ortho- and para-methyl-alpha-methyl-styrenes.

5. Multilayer coextruded polymer slabs and structural shapes according to any one of the preceding claims, wherein the vinyl-aromatic polymer comprises polystyrenes modified with rubbers in an amount of from 3 to 10% by weight.

6. Multilayer coextruded polymer slabs and structural shapes according to claim 5, wherein the rubbers are selected from natural and synthetic rubbers.

7. Multilayer coextruded polymer slabs and structural shapes according to claim 6, wherein the synthetic rubbers are selected from polybutadiene, polyisoprene, butadiene and/or isoprene copolymers with styrene or other monomers having a glass transition temperature lower than -20 °C, saturated ethylene-propylene rubbers, ethylene-propylene-diene terpolymers and silicon rubbers containing unsaturated groups.

8. Multilayer coextruded polymer slabs and structural shapes according to any one of the preceding claims, wherein the ethylenically unsaturated nitrile is acrylonitrile or methacrylonitrile.

9. Multilayer coextruded polymer slabs and structural shapes according to any one of the preceding claims, wherein the polymers for the preparation of the slabs and structural shapes are selected from technopolymers having a modulus of elasticity of from 5000 to 50000.

10. Multilayer coextruded polymer slabs and structural shapes according to claim 9, wherein the technopolymers are selected from aromatic polycarbonates, thermoplastic polyurethanes, crystalline aromatic polyesters such as polyethyleneterephthalate, polybutyleneterephthalate and polyethylene-2,2'-di-phenoxy-ethane-4,4'-dicarboxylate, styrene-butadiene-acrylonitrile terpolymers, styrene-acrylonitrile copolymers, resins of acrylic esters such as polymethylmethacrylate and high-impact polystyrene.

11. A process for the production of multilayer coextruded polymer slabs and structural shapes according to any one of the preceding claims which comprises simultaneously extruding different polymers in a

single extrusion head wherein at least one of the layers consists of a sheet of a vinyl-aromatic polymer containing up to 20% by weight of an ethylenically unsaturated nitrile.

**12.** A process according to claim 11, wherein the coextrusion is carried out at a temperature of from 100 to 250° C.

**13.** A process according to claim 11 or 12, wherein the finished composite is passed through a calender provided with several rollers kept at a temperature of from 20 to 85° C.

**Revendications**

**1.** Plaques et formes structurelles en polymère multicouches coextrudé obtenu par extrusion simultanée de polymères differents avec une tête d'extrusion unique dans lequel au moins une des différentes couches consiste en un copolymère vinyle aromatique qui contient jusqu'à 20% en poids d'unités monomères dérivées de nitrile insaturé éthylénique.

**2.** Plaques et formes structurelles en polymère multicouches coextrudé selon la revendication 1, dans lequel le copolymère vinyle aromatique contient de 5 à 15% en poids desdites unités monomères dérivées de nitrile insaturé éthylénique.

**3.** Plaques et formes structurelles en polymère multicouches coextrudé selon la revendication 1 ou 2, dans lequel le copolymère vinyle aromatique contient au moins 50% en poids d'unités dérivées d'un ou plusieurs composés de vinyle aromatique de formule générale :

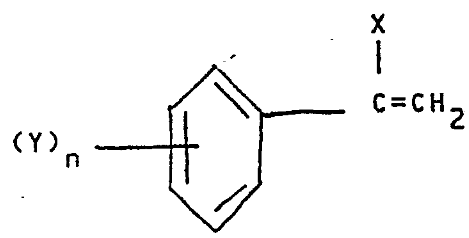

dans laquelle X représente un atome d'hydrogène ou un groupe alkyle contenant de 1 à 4 atomes de carbone, Y représente un halogène ou un groupe alkyle contenant de 1 à 4 atomes de carbone et n vaut zéro ou un entier de 1 à 5.

**4.** Plaques et formes structurelles en polymère multicouches coextrudé selon la revendication 3, dans lequel des composés vinyle aromatiques sont choisis parmi le styrène, le méthyl-styrène, le mono-, di-, tri-, tetra-, pentachlorostyrène et les alpha-méthyl-styrènes correspondants, styrènes alkylés sur le noyau et les alpha-méthyl-styrène correspondants tels que les ortho- et para-méthyl-styrènes, ortho- et para-éthyl-styrènes, ortho- et para-méthyl-alphaméthyl-styrènes.

**5.** Plaques et formes structurelles en polymère multicouches coextrudé selon une quelconque des revendications précédentes, dans lequel le copolymère vinyl-aromatique comprend des polystyrènes modifiés avec des caoutchoucs selon une quantité de 3 à 10% en poids.

**6.** Plaques et formes structurelles en polymère multicouches coextrudé selon la revendication 5, dans lequel les caoutchoucs sont choisis parmi les caoutchoucs naturels et synthétiques.

**7.** Plaques et formes structurelles en polymère multicouches coextrudé selon la revendication 6, dans lequel les caoutchoucs de synthèse sont choisis parmi le polybutadiène, polyisoprène, copolymère butadiène et/ou isoprène avec du styrène ou d'autres monomères ayant une température de transition vitreuse inférieure à -20° C, caoutchoucs éthylène/propylène saturés, terpolymères éthylène/propylène/diène et des caoutchoucs à base de silicium contenant des groupes insaturés.

8. Plaques et formes structurelles en polymère multicouches coextrudé selon l'une quelconque des revendications précédentes, dans lequel le nitrile insaturé éthylénique est l'acrylonitrile ou le méthacrylonitrile.

9. Plaques et formes structurelles en polymère multicouches coextrudé selon l'une quelconque des revendications précédentes, dans lequel les polymères pour la préparation des plaques et formes structurelles sont choisi parmi les technopolymères ayant un module d'élasticité de 5000 à 50000.

10. Plaques et formes structurelles en polymère multicouches coextrudé selon la revendication 9, dans lequel les technopolymères sont choisis parmi les polycarbonates aromatiques, polyuréthanes thermoplastiques, polyesters cristallins aromatiques tels que le polyéthylènetéréphtalate, polybutylènetéréphtalate et polyéthylène-2,2'-di-phénoxy-éthane-4,4'-di-carboxylate, terpolymères styrène-butadiène-acrylonitrile, copolymère styrène-acrylonitrile, résines d'esters acrylique tel que le polyméthylméthacrylate et le polystyrène à résistance au choc élevée.

11. Un procédé de production de plaques et de formes structurelles en polymère multicouches coextrudé selon une quelconque des revendications précédentes qui comprend l'extrusion simultanée de polymères différents dans une tête d'extrusion unique dans lequel au moins une des couches consiste en une feuille d'un copolymère vinyle-aromatique qui contient jusqu'à 20% en poids d'unités de monomère dérivé de nitrile insaturé éthylénique.

12. Un procédé selon la revendication 11, dans lequel la coextrusion est mise en oeuvre à une température de 100 à 250°C.

13. Un procédé selon l'une des revendications 11 ou 12, dans lequel le composé final est passé au travers d'une calandre munie de plusieurs tambours maintenus à une température de 20 à 85°C.

**Patentansprüche**

1. Mehrschichtige coextrudierte Polymerplatten und -strukturprofile, die durch gleichzeitige Extrusion verschiedener Polymere mit einem einzigen Extruderkopf erhalten werden, wobei mindestens eine der verschiedenen Schichten aus einem vinylaromatischen Copolymer besteht, welches bis zu 20 Gew.-% Monomereinheiten enthält, die von einem ethylenisch ungesättigten Nitril abgeleitet sind.

2. Mehrschichtige coextrudierte Polymerplatten und-strukturprofile nach Anspruch 1, worin das vinylaromatische Copolymer 5 bis 15 Gew.-% Monomereinheiten enthält, die von einem ethylenisch ungesättigten Nitril sind.

3. Mehrschichtige coextrudierte Polymerplatten und -strukturprofile nach Anspruch 1 oder 2, worin das vinylaromatische Copolymer mindestens 50 Gew.-% Einheiten enthält, die von einer oder mehreren vinylaromatischen Verbindungen der allgemeinen Formel

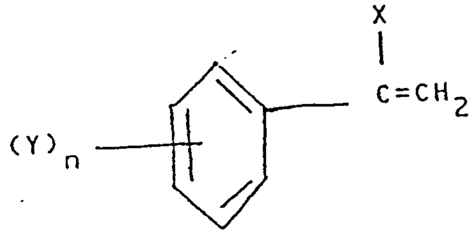

abgeleitet sind, worin X Wasserstoff oder Alkyl mit 1 bis 4 Kohlenstoffatomen bedeutet, Y Halogen oder Alkyl mit 1 bis 4 Kohlenstoffatomen darstellt und n 0 oder eine ganze Zahl von 1 bis 5 ist.

4. Mehrschichtige coextrudierte Polymerplatten und -strukturprofile nach Anspruch 3, worin die vinylaromatischen Verbindungen ausgewählt sind aus Styrol, Methylstyrol, Mono-, Di-, Tri-, Tetra-, Pentachlorstyrol und den entsprechenden $\alpha$-Methylstyrolen, am Kern alkylierten Styrolen und den entsprechenden

α-Methylstyrolen, wie o- und p-Methylstyrol, o- und p-Ethylstyrol, o- und p-Methyl-α-methylstyrol.

5. Mehrschichtige coextrudierte Polymerplatten und -strukturprofile nach irgendeinem der vorhergehenden Ansprüche, worin das vinylaromatische Copolymer Polystyrole umfaßt, die mit Kautschuken in einer Menge von 3 bis 10 Gew.-% modifiziert sind.

6. Mehrschichtige coextrudierte Polymerplatten und -strukturprofile nach Anspruch 5, worin die Kautschuke aus natürlichen und synthetischen Kautschuken ausgewählt sind.

7. Mehrschichtige coextrudierte Polymerplatten und -strukturprofile nach Anspruch 6, worin die synthetischen Kautschuke ausgewählt sind aus Polybutadien, Polyisopren, Butadien- und/oder Isopren-Copolymeren mit Styrolen oder anderen Monomeren mit einer Glasübergangstemperatur von weniger als- 20 °C, gesättigten Ethylen-Propylen-Kautschuken, Ethylen/Propylen/Dien-Terpolymeren und Siliconkautschuken, die ungesättigte Gruppen enthalten.

8. Mehrschichtige coextrudierte Polymerplatten und -strukturprofile nach irgendeinem der vorhergehenden Ansprüche, worin das ethylenisch ungesättigte Nitril Acrylnitril oder Methacrylnitril ist.

9. Mehrschichtige coextrudierte Polymerplatten und -strukturprofile nach irgendeinem der vorhergehenden Ansprüche, worin die Polymere zur Herstellung der Platten und Strukturprofile aus Technopolymeren mit einem Elastizitätsmodul von 5000 bis 50000 ausgewählt sind.

10. Mehrschichtige coextrudierte Polymerplatten und -strukturprofile nach Anspruch 9, worin die Technopolymere aus aromatischen Polycarbonaten, thermoplastischen Polyurethanen, kristallinen aromatischen Polyestern wie Polyethylenterephthalat, Polybutylenterephthalat und Polyethylen-2,2'-diphenoxyethan-4,4'-dicarboxylat, Styrol/Butadien/Acrylnitril-Terpolymeren, Styrol/Acrylnitril-Copolymeren, Harzen von Acrylestern, wie Polymethylmethacrylat und hochschlagzähem Polystyrol, ausgewählt sind.

11. Verfahren zur Herstellung von mehrschichtigen coextrudierten Polymerplatten und -strukturprofilen nach irgendeinem der vorhergehenden Ansprüche, welches das gleichzeitige Extrudieren verschiedener Polymere in einem einzigen Extruderkopf umfaßt, wobei mindestens eine der schichten aus einer Schicht eines vinylaromatischen Copolymers besteht, welches bis zu 20 Gew.-% Monomereinheiten enthält, die von einem ethylenisch ungesättigten Nitril abgeleitet sind.

12. Verfahren nach Anspruch 11, worin die Coextrusion bei einer Temperatur von 100 bis 250 °C durchgeführt wird.

13. Verfahren nach Anspruch 11 oder 12, worin der fertige Verbundwerkstoff durch einen Kalander geführt wird, welcher mit mehreren Walzen ausgerüstet ist, die bei einer Temperatur von 20 bis 85 °C gehalten werden.

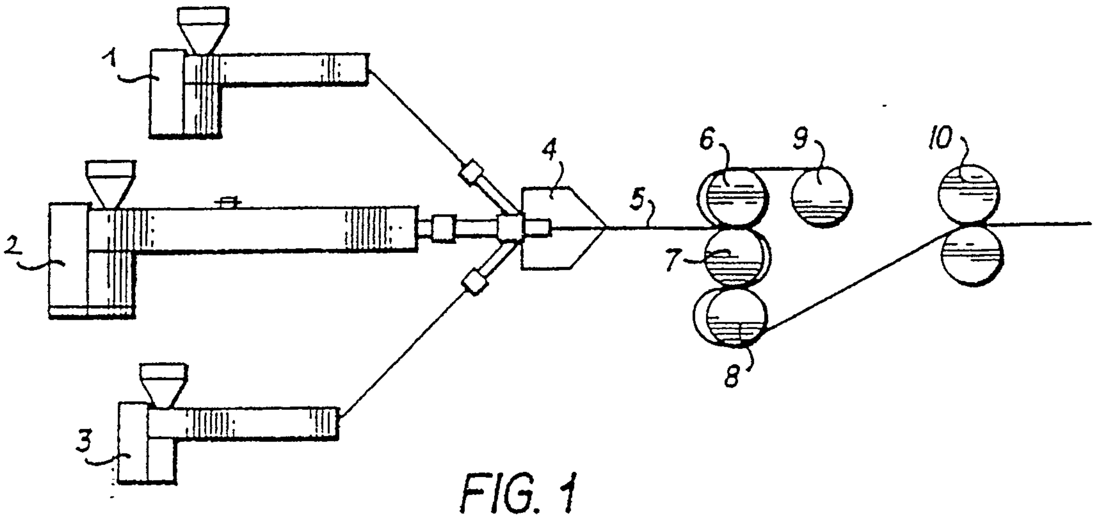


FIG. 1

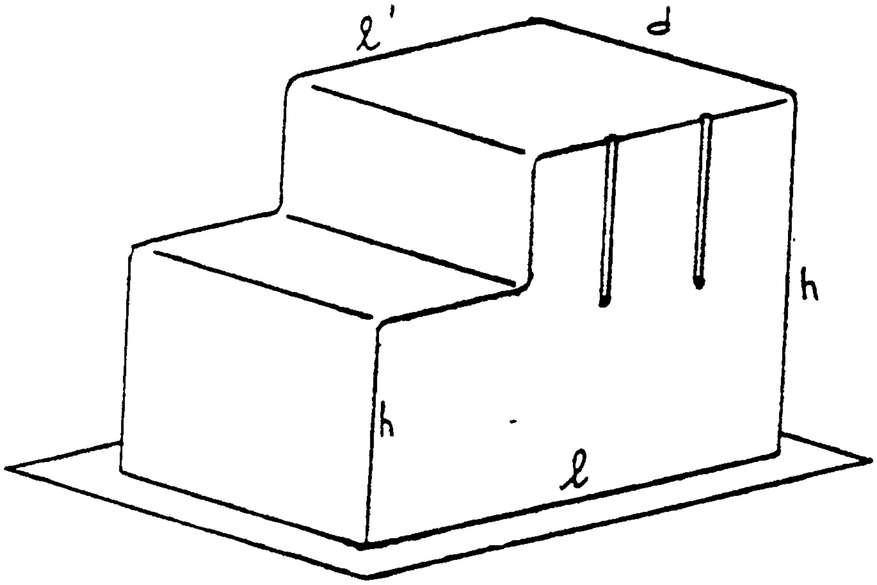


FIG. 2